# EUROPEAN PATENT SPECIFICATION

(11) **EP 4 388 192 B1**
(45) Date of publication and mention of the grant of the patent: **18.03.2026**
(21) Application number: 22769027.8
(22) Date of filing: 18.08.2022
(51) Int. Cl.: F03D 1/06

(54) **WINGED SPAR CAP CONFIGURATION FOR A JOINTED WIND TURBINE BLADE**
FLÜGELHOLMGURTKONFIGURATION FÜR EIN SEGMENTIERTES WINDTURBINENROTORBLATT
CONFIGURATION DE SEMELLE DE LONGERON À AILE POUR PALE D'ÉOLIENNE JOINTE

(30) Priority: 19.08.2021 WO PCT/US2021/046600
(43) Date of publication of application: 26.06.2024
(73) Proprietor: LM Wind Power A/S, 6000 Kolding (DK)
(72) Inventor: RAZEGHI, Rama, Eastleigh, Hampshire SO534SE (GB); HANCOCK, Mark, Chandlers Ford, Hampshire SO534SE (GB); MONK, Christopher, Eastleigh, Hampshire SO534SE (GB); LOKKE, William Carrillo, Boulder, Colorado 80303 (US); LINDBY, Torben, 6000 Kolding (DK); DE BOER, Eduard, 1703DH Heerhugowaard (NL); CABRERA LANGE, Miguel, Greenville, South Carolina 29615 (US); HANRAHAN, Kristen, New Orleans, Louisiana 70129 (US)
(74) Representative: COPA Copenhagen Patents
(86) International application number: PCT/US2022/040756
(87) International publication number: WO 2023/023249

(56) References cited:
- WO-A1-2020/086080
- US-A1- 2011 081 248
- US-A1- 2015 369 211
- US-A1- 2018 372 066

## Description

### FIELD

The present subject matter relates generally to wind turbine rotor blades and, more particularly, to a spar cap configuration for a jointed wind turbine blade.

### BACKGROUND

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades generally include a body shell formed by two shell halves of a composite laminate material. The shell halves are generally manufactured using molding processes and then coupled together along the corresponding ends of the rotor blade. In general, the body shell is relatively lightweight and has structural properties (e.g., stiffness, buckling resistance, and strength) which are not configured to withstand the bending moments and other loads exerted on the rotor blade during operation.

In recent years, wind turbines for wind power generation have increased in size to achieve improvement in power generation efficiency and to increase the amount of power generation. Along with the increase in size of wind turbines for wind power generation, wind turbine rotor blades have also significantly increased in size, resulting in difficulties in integral manufacture as well as conveyance and transport of the blades to a site.

In this regard, the industry is developing sectional wind turbine rotor blades wherein separate blade segments are manufactured and transported to a site for assembly into a complete blade (a "jointed" blade). In certain constructions, the blade segments are joined together by a beam structure that extends span-wise from one blade segment into a receiving section of the other blade segment. Reference is made, for example, to US Patent Publication No. 2015/0369211, which describes a first blade segment with a span-wise extending beam structure that structurally connects with a receiving section in a second blade segment. The beam structure forms a portion of the internal support structure for the blade and includes a shear web connected with a suction side spar cap and a pressure side spar cap. Multiple bolt joints are used to connect the beam structure with the receiving section in the second blade segment, including a span-wise bolt on the end face of the beam and at least one chord-wise bolt through the beam structure spaced from the joint line between the blade segments.

The jointed blade configuration utilizing a spar beam and receiving section, as described above, imposes significant structural challenges, particularly in ensuring the structural integrity of the bonded joint without adding unnecessary weight to the blade or sacrificing structural integrity in other parts of the blade.

The International Publication Number 2020/086080 proposes a solution wherein the spar caps in the second blade segment (the root blade segment) are formed with a first longitudinal section having a first chord-wise width and a second adjacent longitudinal section having a second chord-wise width greater than the first chord-wise width. The spar caps in the second blade segment may be formed from the same continuous material along the entirety thereof. In an alternate embodiment, the spar caps in the second blade segment are formed from a first material along the first section and from a second material along the second section and a scarf joint is formed between the first material and the second material. A span-wise transition section in the spar caps is provided where the first chord-wise width increases gradually to the second chord-wise width and the thickness of the spar caps decreases to a reduced thickness, wherein the scarf joint is adjacent to the transition section.

Further prior art is disclosed in US 2011/081248 A1.

The present invention addresses certain of the structural integrity issues at the bonded joint by providing improvements to the spar cap configuration of the International Publication Number 2020/086080.

### BRIEF DESCRIPTION

Aspects and advantages of the invention will be set forth in part in the following description, or may be obvious from the description, or may be learned through practice of the invention.

In one aspect, the present subject matter is directed to a jointed wind turbine rotor blade, as defined in claim 1, that includes a first blade segment and a second blade segment extending in opposite directions from a chord-wise joint line. One of the blade segments is a root-end segment and the other is a tip-end segment. The first and second blade segments are connected at the chord-wise joint line by internal joint structure configured between the blade segments. Opposite spar caps are configured in the first blade segment. Each of spar caps includes a longitudinally extending center section having a constant transverse width up to the chord-wise joint line. Wing members are disposed against opposite longitudinal sides of the center section of the spar caps, each wing member having a head section with a constant transverse width and a flared tail section having a decreasing transverse width, the head section aligned with an end of the center section at the chord-wise joint line. The center section of the spar caps is formed from a first material having a first rigidity and the wing members are formed at least partially from a second material having a second lesser rigidity such that the wings members have an overall rigidity that is less than first rigidity of the center section.

In a particular embodiment, the first material is a carbon material, and the second material is a glass material.

The flared tail section of the wing members may have a continuously decreasing slope. In an alternate embodiment, the flared tail section may have a discontinuous or step-wise decreasing slope.

The wing members have a constant cross-sectional height along an entire longitudinal length thereof. In an alternate embodiment, the wing members may have a decreasing cross-sectional height towards the chord-wise joint line that matches a decreasing cross-sectional height of the center section of the spar cap. The deceasing cross-sectional height of the wing members and the center section may have a step-wise profile.

In some embodiments, the wing members may include a carbon material in at least a portion of the head section and a glass material in the flared tail section. The center section and the wing members may be affixed (e.g., bonded) to shell components of the wind turbine blade, wherein the carbon material in the head section is disposed against the shell components. In this embodiment, the carbon material may extend at least along a longitudinal length of the head section.

According to the invention, the internal joint structure between the blade segments includes a receiver box in the first blade section aligned with the chord-wise joint line. According to the invention, the center section of the spar cap is offset from a longitudinal centerline of the receiver box.

According to the invention, the wing member along one side of the center section has a wider transverse width than the wing member at an opposite side of the center section.

In still another embodiment, the wing member along one side of the center section may have a longer longitudinal length and a wider transverse width than the wing member at an opposite side of the center section.

**In** some embodiments, the internal joint structure may include a spar beam extending span-wise from the second blade segment into a receiver box configured in the first blade segment, wherein the receiver box has upper and lower spar surfaces bonded to the center section and the wing members of the opposite spar caps. In this embodiment, the upper and lower spar surfaces of the receiver box may have a chord-wise width corresponding to a combined chord-wise width of the center section of the spar cap and the head sections of the wing members.

In certain embodiments, the first blade segment may be a root-end segment and the second blade segment is a tip-end segment. Alternatively, the first blade segment may be a tip-end segment and the second blade segment is a root-end segment.

The present invention also encompasses a wind turbine having one or more of the jointed wind turbines blades set forth herein.

These and other features, aspects, and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine that may utilize a jointed wind turbine blade according to the present disclosure;
FIG. 2 illustrates a rotor blade having a first blade segment and a second blade segment, and joint structure that connects the blade segments;
FIG. 3 is a perspective view of an embodiment of a second blade segment with joint structure;
FIG. 4 is a perspective view of an embodiment of a first blade segment with complimentary joint structure;
FIG. 5 is a top view of a jointed wind turbine blade in accordance with aspects of the present invention;
FIG. 6 is a top component view of a winged spar cap for a jointed wind turbine blade;
FIG. 7 is a top component view of a winged spar cap for a jointed wind turbine blade;
FIG. 8 is a top component view of an alternative embodiment of a winged spar cap for a jointed wind turbine blade;
FIG. 9A is a cross-sectional view taken along the lines indicated in FIG. 7;
FIG. 9B is a cross-sectional view taken along the lines indicated in FIG. 7;
FIG. 10 is a perspective component view of an alternate embodiment of a winged spar cap according to the present disclosure;
FIG. 11 illustrates a perspective view of an embodiment of a non-jointed rotor blade having a spar cap, such as spar cap of a varying width according to the present disclosure;
FIG. 12 illustrates a partial, perspective view of an embodiment of the spar cap at a span-wise location having an increased width according to the present disclosure;
FIG. 13 illustrates a top view of the spar cap of FIG. 12 at the span-wise location having the increased width according to the present disclosure;
FIG. 14 illustrates a top view of an embodiment of a pultruded wing member having a generally triangular shape according to the present disclosure;
FIG. 15 illustrates a top view of an embodiment of a spar cap with an increased width formed by pultruded wing members having a generally triangular shape according to the present disclosure;
FIG. 16 illustrates a top view of an embodiment of a pultruded wing member having a generally rectangular shape are illustrated; and
FIG. 17 illustrates a top view of an embodiment of a spar cap with an increased width formed by pultruded wing members having a generally rectangular shape according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present subject matter is directed to jointed wind turbine rotor blades having a modified spar cap configuration to accommodate joint structure that connects the segments of the jointed blade and provides increased structural integrity to bonded joint area of the blade. The invention also encompasses a wind turbine that utilizes one or more of the jointed wind turbine blades, as set forth herein.

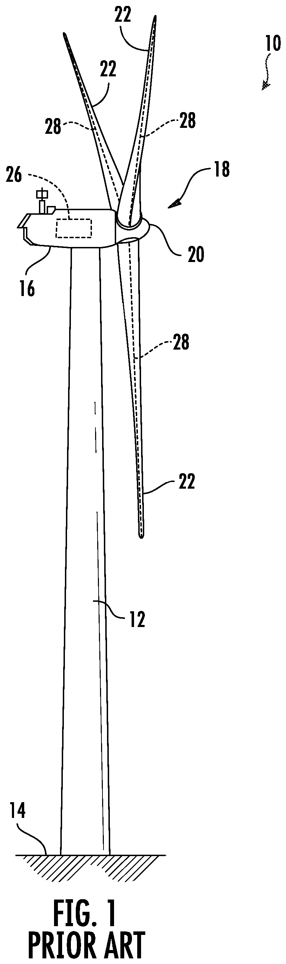

Referring now to the drawings, FIG. 1 illustrates a perspective view of one embodiment of a wind turbine 10 that includes a tower 12 extending from a support surface 14, a nacelle 16 mounted on the tower 12, and a rotor 18 coupled to the nacelle 16. The rotor 18 includes a rotatable hub 20 and one or more rotor blades 22 coupled to and extending outwardly from the hub 20. The rotor blades 22 may be jointed blades in accordance with the present invention and are spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator positioned within the nacelle 16 to permit electrical energy to be produced.

The wind turbine 10 may also include a turbine control system or main controller 26 centralized within the nacelle 16. In general, the main controller 26 may comprise a computer or other suitable processing unit. Thus, in several embodiments, the main controller 26 may include suitable computer-readable instructions that, when implemented, configure the controller 26 to perform various different functions, such as receiving, transmitting and/or executing wind turbine control signals (e.g., pitch commands). As such, the main controller 26 may generally be configured to control the various operating modes (e.g., start-up or shut-down sequences) and/or components of the wind turbine 10. For example, the controller 26 may be configured to adjust the blade pitch or pitch angle of each rotor blade 22 (i.e., an angle that determines a perspective of the blade 22 with respect to the direction of the wind) about its pitch axis 28 via a pitch system in order to control the rotational speed of the rotor blade 22 as well as the loads acting on the rotor blade 22.

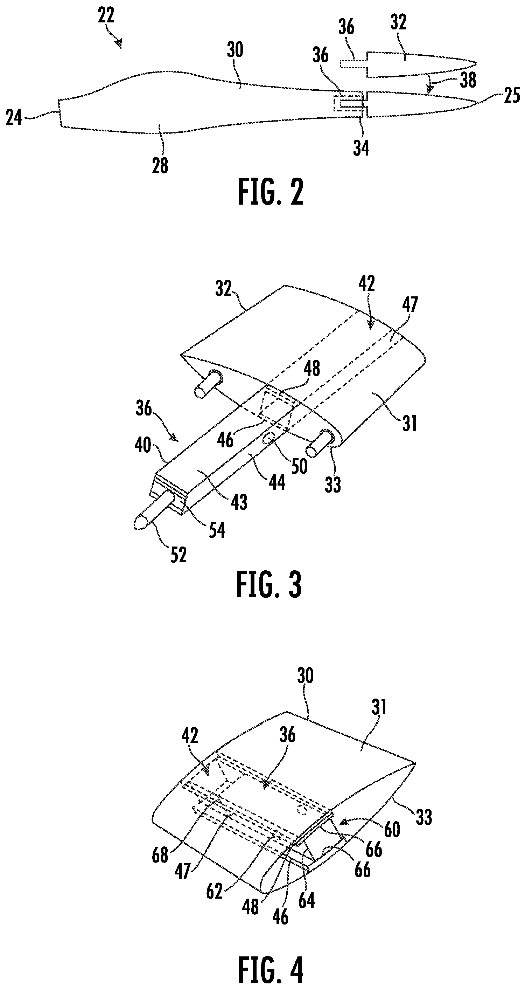

Referring to FIGS. 2 through 5 in general, a jointed rotor blade 22 is depicted having a first blade segment 30 and a second blade segment 32 that extend in opposite directions from a chord-wise joint line 34. Each of the blade segments 30, 32 includes a pressure side shell member 31 and a suction side shell member 33. The first blade segment 30 and the second blade segment 32 are connected by an internal joint structure 36 extending into both blade segments 30, 32 to facilitate joining of the blade segments 30, 32. The arrow 38 in FIG. 2 shows that the jointed rotor blade 22 in the illustrated example includes two blade segments 30, 32 and that these blade segments 30, 32 are joined by inserting the internal joint structure 36 of the second blade segment 32 into corresponding joint structure 36 configured in the first blade segment 30.

**In** the illustrated embodiment, the second blade segment 32 is a tip-end segment in that it is closest to the blade tip 25. The first blade segment 30 is a root-end segment in that it is closest to the blade root 24. It should be appreciated, however, that the "first" and "second" terms are used for reference, and that the blade segments 30, 32 are interchangeable. For example, the joint structure 36 of the first blade segment 30 (root-end segment) may, in an alternate embodiment, be the joint structure 36 of the second blade segment 32 (tip-end segment).

Each of the blade segments 30, 32 includes an internal spar structure 42 that typically includes opposite spar caps 46 (suction side spar cap) and 48 (pressure side spar cap) interconnected with one or more shear webs 47. For example, the spar structure may be a box-beam structure with the spar caps 46, 48 interconnected with spaced-apart shear webs 47, as depicted in FIGS. 2 and 3, or an I-beam structure wherein the spar caps 46, 48 are interconnected by a single shear web 47, as known to those skilled in the art.

**In** the depicted embodiment, the joint structure 36 of the second blade segment 32 includes a beam structure 40 ("spar beam") that extends lengthways (e.g., span-wise) beyond the chord-wise joint line 34 for structurally connecting with the internal support structure 36 in the first blade segment 30. The beam structure 40 may be integrally formed with the second blade segment 32 as an extension of the spar structure 42, or may be a separately formed structure that is bonded to the spar structure 42. The beam structure 40 may include at least one interconnecting web 44 (e.g., a shear web) connected with opposite spar surfaces 43. **In** the illustrated embodiments, the beam structure 40 is formed as a closed-ended box-type structure having opposite interconnecting webs 44 and opposite spar surfaces 43.

The second blade segment 32 may include one or more first bolt joints (also referred to as "pins") towards a first end 54 of the beam structure 40. For example, a bolt 52 may be located on the end 54 of the beam structure 40 and oriented in a span-wise direction. The second blade segment 32 may also include a bolt slot 50 located on the beam structure 40 proximate to the chord-wise joint 34 and oriented in a chord-wise direction for engagement with a chord-wise bolt (not illustrated) for the purpose of interconnecting the first 30 and second 32 blade segments.

**In** FIG. 4, the internal support structure 36 of the first blade segment 30 includes a receiver box 60 extending span-wise within the first blade segment 30 for receiving the beam structure 40 of the second blade segment 32. The receiver box 60 includes opposite spar surfaces 66 interconnected by one or more shear webs 64. For example, the receiver box 60 may be an open-ended female box-beam structure with opposite spar cap surfaces 66 and opposite shear webs 64. The receiver box 60 may include a closed end face 68 that includes a bolt slot through which the bolt 52 on the spar beam 40 extends in a joined state of the blade segments 30, 32. Bolt slots 62 may be defined through the shear webs 64 that align with the bolt slots 50 in the spar beam, wherein a chord-wise bolt (not shown) extends through the bolt slots 62, 50 in the joined state of the blade segments 30, 32.

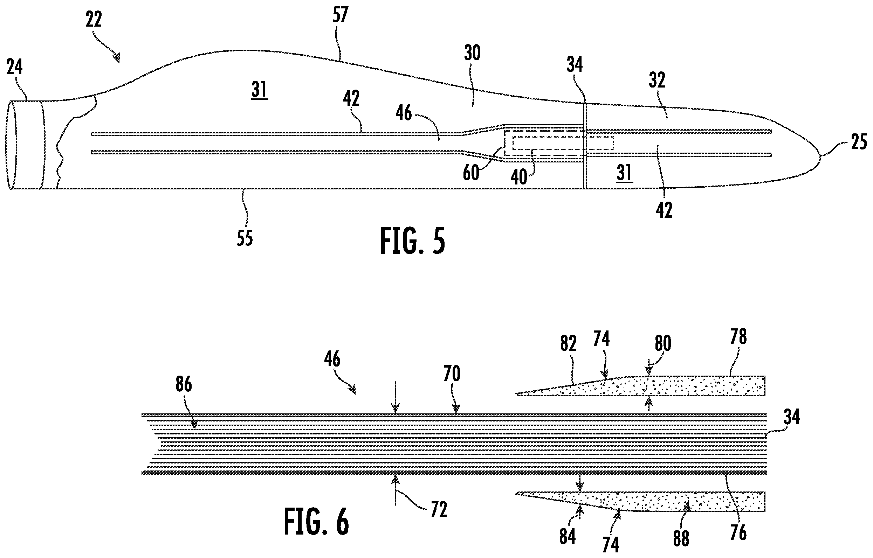

The present invention provides spar cap 46 configured in the blade segment (first 30 or second 32) of the jointed wind turbine blade 22 that contains the receiver box 60. It is understood that opposite spar caps 46 are configured on the interior surfaces of the pressure 31 and suction 33 side shell members. The configuration of the spar cap 46 is uniquely designed for the relatively complicated loads induced in the spar cap 46 by the internal joint structure 36 without unduly adding to the weight of the spar cap. The spar cap 46 is formed with a flared portion adjacent the chord-wise joint line 34, as particularly seen in FIG. 5 and discussed in detail below.

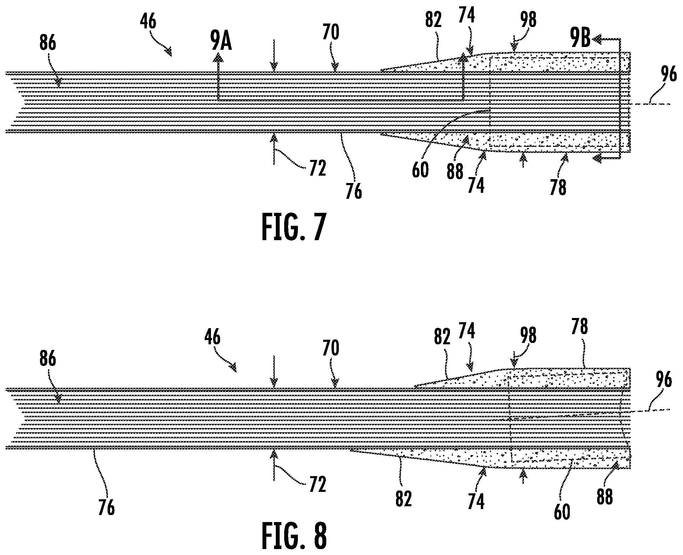

Referring to FIGS. 6 and 7 in general, each of the spar caps 46 includes a longitudinally extending (span-wise) center section 70 having a generally constant transverse width 72 up to the chord-wise joint line 34. The center section 70 is formed from a first material 86 having a first rigidity. For example, in certain embodiments, the center section 70 may be formed from pultruded rods or plates comprising substantially carbon fibers having a relatively high rigidity.

Wing members 74 are disposed against opposite longitudinal sides 76 of the center section 70 of the spar caps 46. The wing members 74 are formed separately from the center section 70 and integrated with the shell member 31, 33 in a layup and infusion molding process. Each wing member 74 has a head section 78 with a relatively constant transverse width 80 and a flared tail section 82 having a decreasing transverse width 84. The head section 78 is aligned with an end of the center section 70 at the chord-wise joint line 34.

The wing members 74 may be formed in various ways. For example, the wing members 74 may be made from pultrusions, preforms, fabric, a laminate of unidirectional fiber plies, and so forth. These materials are well-known to those skilled in the art and a detailed explanation thereof is not necessary for purposes of the present disclosure.

The wing members 74 are formed partially or entirely from a second material 88 having a rigidity that is less than the rigidity of the first material. For example, the wing members 74 may be made entirely of a glass material while the center section 70 of the spar cap 46 is made partially or entirely of a carbon material. The difference between the rigidities of the first material 86 making up the center section 70 and the second material 88 making up the wing members 74 provides a cross-sectional rigidity profile to the spar cap 46 adjacent to the chord-wise joint line 34 having a higher center rigidity and a lesser rigidity at the sides. This lesser side rigidity accommodates flexure of the shell members while still providing structural load support and transition for the wider receiver box 60.

The flared tail section 82 of the wing members74 may have a continuously decreasing slope as depicted in FIGS. 4-8, wherein the slope is constant or varying. In an alternate embodiment, the flared tail section 82 may have a discontinuous or step-wise decreasing slope.

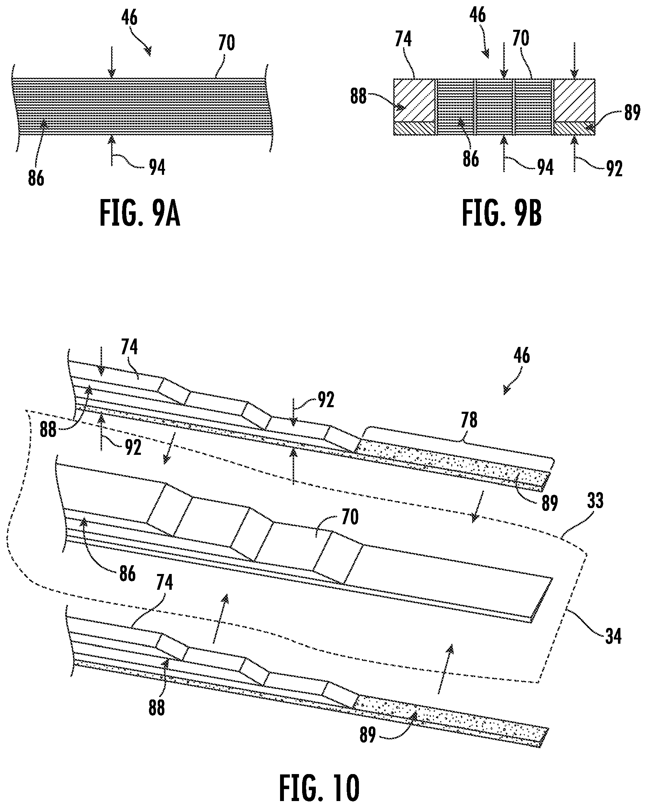

In a particular embodiment, the wing members 74 have a constant cross-sectional height 92 along an entire longitudinal length thereof. This height 92 may correspond to the cross-sectional height 94 of the center section 70, as depicted in FIGS. 9A and 9B.

FIG. 10 depicts an alternate embodiment of the wing members 74 wherein the wing member 74 has a decreasing cross-sectional height 92 in a direction towards the chord-wise joint line 34 that matches a decreasing cross-sectional height 94 of the center section 70 of the spar cap 46. The decreasing cross-sectional heights 92, 84 may be necessary to accommodate a receiver box 60 having increased thickness spar cap surfaces 66 (FIG. 4). The head section 78 of the wing members 74 and the end of the center section 70 adjacent to the chord-wise joint line 34 may have a constant height, as depicted in FIG. 10, and define the area on which the receiver box 60 sits.

In the embodiments of FIGS. 9B and 10, the wing members 74 include a third material 89 that has an increased rigidity as compared to the second material 88. For example, the wing members 74 may include a carbon material 89 in at least a portion of the head section 78 and a glass material in the flared tail section 82. An outer most layer(s) of the wing members 74 may be formed of the carbon material and extend along the length of the wing member 74 extending into the flared tail section. as depicted in FIG. 10. The center section 70 and the wing members 74 may be affixed (e.g., bonded or molded) to shell components 33, 31 of the wind turbine blade 22, wherein the carbon material in the head section 70 is disposed against the shell components 31, 33.

Referring to FIG. 7, in certain embodiments, the internal joint structure 42 between the blade segments 30, 32 may include a longitudinal centerline 96 of the receiver box 60 aligned with a centerline of the center section 70. Referring to FIG. 8, in alternate embodiments, the center section 70 of the spar cap 46 may be offset from the longitudinal centerline 96 of the receiver box 60. In this case, it may be desired or necessary for one of the wing members 74 to have a longer longitudinal length than the wing member 74 at an opposite side 76 of the center section 70. In this embodiment, the head sections 78 of both wing members 74 may have the same length and the flared tail sections 82 may have different lengths. In still another embodiment, the wing member 74 having the longer length may also have a wider transverse width than the wing member 74 at the opposite side 76 of the center section.

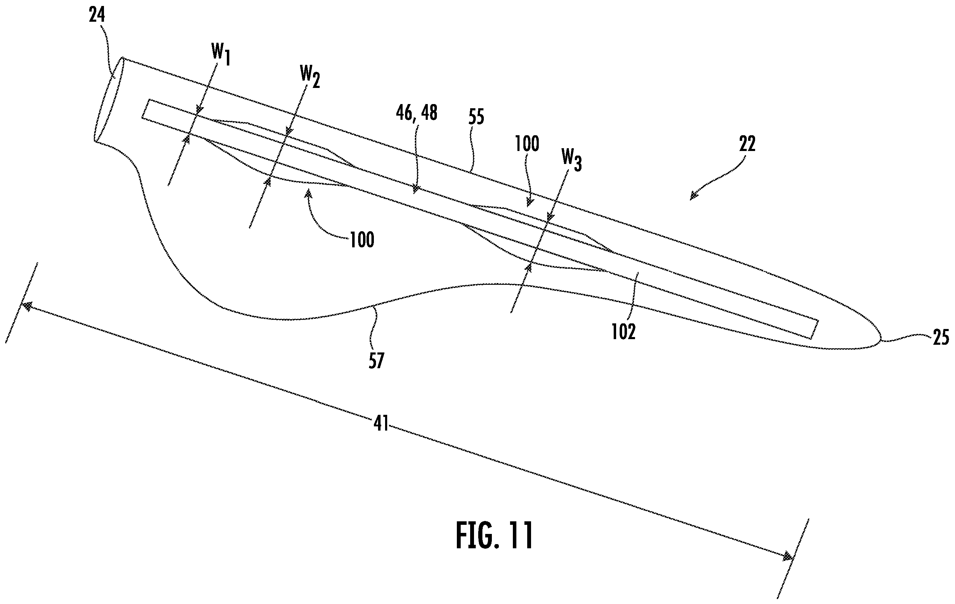

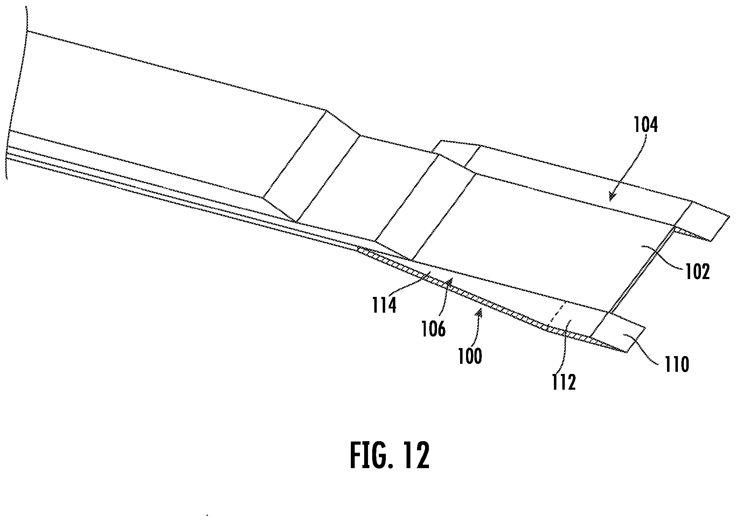

Referring now to FIGS. 11-17, additional embodiments of rotor blades 22 according to the present disclosure are illustrated. In particular, FIG. 11 illustrates a perspective view of an embodiment of a non-jointed rotor blade 22 having a spar cap, such as spar cap 46, 48, of a varying width according to the present disclosure. FIG. 12 illustrates a partial, perspective view of an embodiment of the spar cap 46, 48 at a span-wise location having an increased width 100 according to the present disclosure. More specifically, as shown in FIG. 11, the spar cap 46, 48 has a varying width along a span 41 of the rotor blade 22. For example, as shown in the illustrated embodiment, the spar cap 46, 48 may include a first width W₁, a second width W₂, a third width W₃, and so on, at different span-wise locations along the rotor blade 22 such that the spar cap 46, 48 can be tailored to accommodate differing stresses and/or loading on the spar cap 46, 48. Moreover, as shown, the locations of the increased width 100 may also taper out to a maximum width (e.g., widths W₂ and W₃) and then taper back down to the width (e.g., W₁) of center section 102 of the spar cap 46, 48. This pattern can be repeated as often as needed to tailor the spar cap 46, 48 to accommodate differing stresses and/or loading.

Referring particularly to FIG. 12, the location having the increased width 100 includes one or more pultruded wing members 104, 106, similar to wing members 74, placed adjacent to a center section 102 of the spar cap 46, 48, e.g., on one or more sides of the center section 102. Thus, placement of the pultruded wing member(s) 104, 106 on one or more sides of the center section 102 provides the increased width 100 of the spar cap 46, 48. Moreover, as shown, the pultruded wing member(s) 104, 106 may have one or more ends 110 having a chamfer. In such embodiments, the chamfer may be a function of a thickness of the pultruded wing member(s) 104, 106. For example, in embodiment, the chamfer may be up to about 5 millimeters for a 5-mm thick pultruded wing member. In further embodiments, a 100:1 chamfer ratio may be used for a linear chamfer, though different chamfer profiles may also be used.

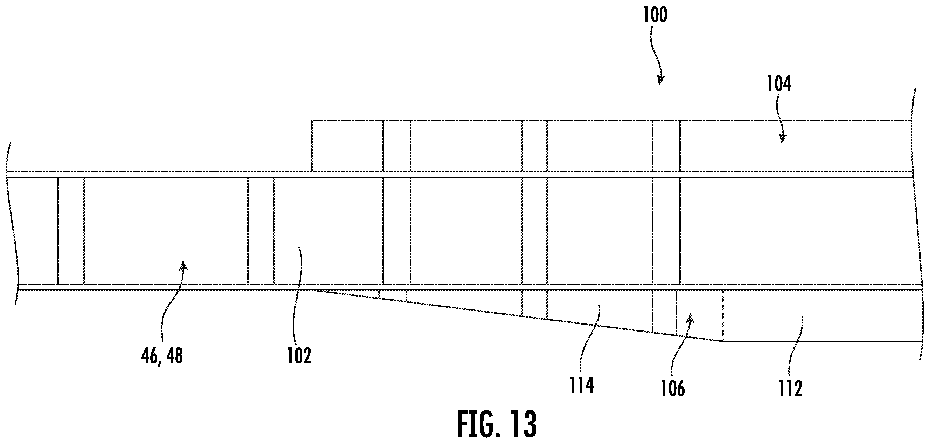

Referring now to FIG. 13, a top view of the spar cap 46, 48 of FIG. 12 at the span-wise location having the increased width 100 according to the present disclosure is illustrated. In particular, as shown, a first pultruded wing member 104 has a generally rectangular shape (as viewed from the top of the spar cap 46, 48), whereas a second pultruded wing member 106 has a generally angled or triangular shape (as viewed from the top of the spar cap 46, 48). In particular, as shown in FIGS. 12 and 13, the second pultruded wing members 106 may have a head section 112 with a generally rectangular or square shape as well as a tail section 114 with a generally angled or triangular shape (also described herein as a flared tail section). It should be understood that any number of the pultruded wing member(s) 104, 106 having any suitable shape may be included along the span 41 of the rotor blade 22 to increase the width of the spar cap 46, 48.

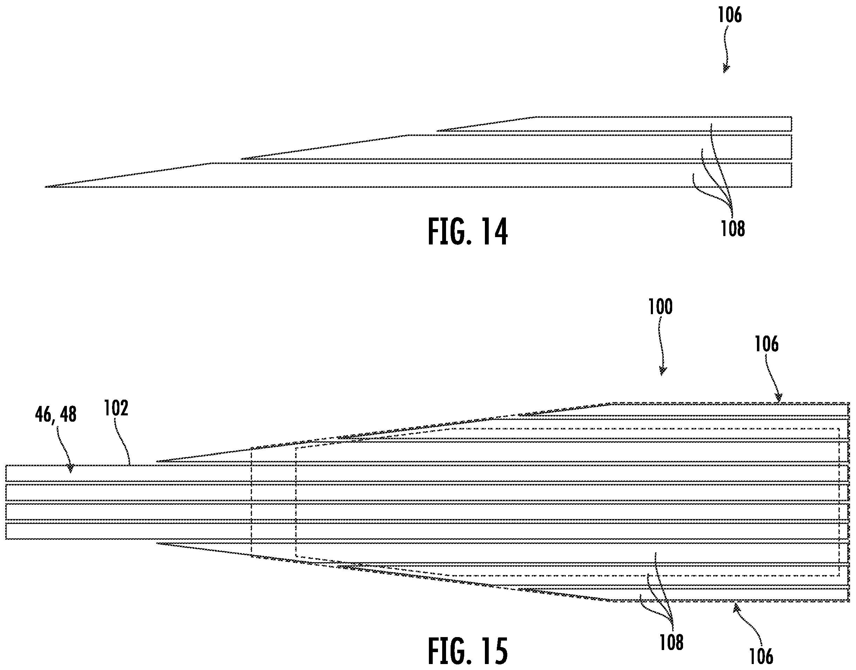

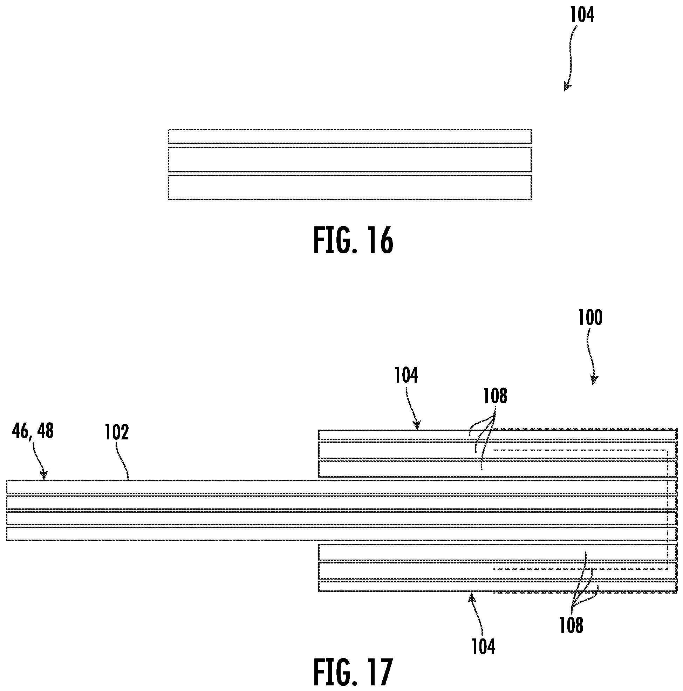

Referring to FIGS. 14 and 15, top views of the second pultruded wing member 106 having a generally angled or triangular shape are illustrated. In particular, as shown the second pultruded wing member 106 are constructed of a plurality of pultruded components 108, such as pultruded plates, rods, stacks, columns, or similar. Similarly, as shown in FIGS. 16 and 17, top views of the first pultruded wing member 104 having a generally rectangular shape are illustrated. In particular, as shown the first pultruded wing member 104 are constructed of a plurality of pultruded components 108, such as pultruded plates, rods, stacks, columns, or similar.

As used herein, the terms "pultruded," "pultrusions," or similar generally encompass reinforced materials (e.g., fibers or woven or braided strands) that are impregnated with a resin and pulled through a stationary die such that the resin cures or undergoes polymerization. As such, the process of manufacturing pultruded members is typically characterized by a continuous process of composite materials that produces composite parts having a constant cross-section. Thus, the pre-cured composite materials may include pultrusions constructed of reinforced thermoset or thermoplastic materials. Further, the spar caps 46, 48 may be formed of the same pre-cured composites or different pre-cured composites. In addition, the pultruded components may be produced from rovings, which generally encompass long and narrow bundles of fibers that are not combined until joined by a cured resin.

The present invention also encompasses a wind turbine having one or more of the wind turbines blades set forth herein.

Referring to FIG. 1, the present invention also encompasses a wind turbine 10 having one or more of the wind turbine blades 22 as described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A jointed wind turbine rotor blade (22), comprising:
a first blade segment (30) and a second blade segment (32) extending in opposite directions from a chord-wise joint line (34) and connected at the chord-wise joint line (34) by an internal joint structure (36) configured between the first and second blade segments (30, 32), wherein the internal joint structure (36) comprises a receiver box in the first blade segment (30) aligned with the chord-wise joint line (34);
opposite spar caps (46) in the first blade segment (30), each of the spar caps (46) comprising:
a longitudinally extending center section (70) having a constant transverse width up to the chord-wise joint line (34), wherein the center section is offset from a longitudinal centerline of the receiver box; and
wing members (74) disposed against opposite longitudinal sides of the center section (70), each wing member having a head section (78) with a constant transverse width and a flared tail section having a decreasing transverse width, the head section (78) aligned with an end of the center section (70) at the chord-wise joint line (34), wherein a first wing member of the wing members (74) along one side of the center section has a wider transverse width than a second wing member of the wing members at an opposite side of the center section,
wherein the center section (70) is formed from a first material having a first rigidity and the wing members (74) formed at least partially from a second material having a second lesser rigidity such that the wings members have an overall rigidity that is less than first rigidity of the center section (70).

2. The jointed wind turbine blade as in claim 1, wherein the first material comprises a carbon material and the second material comprises a glass material.

3. The jointed wind turbine blade of any preceding claim, wherein the flared tail section comprises a continuous decreasing slope.

4. The jointed wind turbine blade of any preceding claim, wherein the wing members (74) have a constant cross-sectional height along an entire longitudinal length thereof.

5. The jointed wind turbine blade of any preceding claim, wherein the wing members (74) have a decreasing cross-sectional height towards the chord-wise joint line (34) that matches a decreasing cross-sectional height of the center section (70).

6. The jointed wind turbine blade as in claim 5, wherein the decreasing cross-sectional height of the wing members (74)and the center section (70) comprises a step-wise profile.

7. The jointed wind turbine blade of any preceding claim, wherein the wing members (74) comprise a carbon material in at least a portion of the head section (78) and a glass material in the flared tail section.

8. The jointed wind turbine blade as in claim 7, wherein the center section (70) and the wing members (74) are affixed to shell components of the wind turbine blade, the carbon material in the head section (78) disposed against the shell components.

9. The jointed wind turbine blade as in claim 8, wherein the carbon material extends at least along a longitudinal length of the head section (78).

10. The jointed wind turbine blade of any preceding claim, wherein the first wing member has a longer longitudinal length than the second wing member.

11. The jointed wind turbine blade of any preceding claim, wherein the internal joint structure (36) comprises a receiver box in the first blade segment (30) aligned with the chord-wise joint line (34), the center section (70) of the spar cap offset from a longitudinal centerline of the receiver box, the wing member along one side of the center section comprising a longer longitudinal length and a wider transverse width than the wing member at an opposite side of the center section (70).

12. The jointed wind turbine rotor blade of any preceding claim, wherein the internal joint structure (36) comprises a spar beam extending span-wise from the second blade segment (32) into a receiver box configured in the first blade segment (30), the receiver box comprising upper and lower spar surfaces bonded to the center section (70) and the wing members (74) of the opposite spar caps (46).

13. The jointed wind turbine rotor blade as in claim 12, wherein the upper and lower spar surfaces of the receiver box comprise a chord-wise width corresponding to a combined chord-wise width of the center section (70) and the head section (78) of the wing members (74).

14. The jointed wind turbine rotor blade of any preceding claim, wherein the first blade segment (30) is one of a root-end segment or a tip-end segment and the second blade segment (32) is the other of the root-end segment of the tip-end segment.

## Patentansprüche

1. Zusammengefügtes Windkraftanlagen-Rotorblatt (22), umfassend:
ein erstes Blattsegment (30) und ein zweites Blattsegment (32), die sich in entgegengesetzten Richtungen von einer Sehnenrichtungs-Fügelinie (34) erstecken und an der Sehnenrichtungs-Fügelinie (34) durch eine zwischen dem ersten und dem zweiten Blattsegment (30, 32) konfigurierte interne Fügestruktur (36) verbunden sind, wobei die interne Fügestruktur (36) eine Aufnahmebuchse in dem ersten Blattsegment (30) umfasst, die auf die Sehnenrichtungs-Fügelinie (34) ausgerichtet ist;
einander gegenüberliegende Holmkappen (46) in dem ersten Blattsegment (30), wobei die Holmkappen (46) jeweils Folgendes umfassen:
einen sich längs erstreckenden Mittenabschnitt (70) mit einer bis zu der Sehnenrichtungs-Fügelinie (34) konstanten Breite in Querrichtung, wobei der Mittenabschnitt von einer Längsmittellinie der Aufnahmebuchse versetzt ist; und
Flankenelemente (74), die an einander gegenüberliegenden Längsseiten des Mittenabschnitts (70) anliegend angeordnet sind, wobei die Flankenelemente jeweils einen Kopfabschnitt (78) mit konstanter Breite in Querrichtung und einen aufgeweiteten Endabschnitt mit abnehmender Breite in Querrichtung aufweisen, wobei der Kopfabschnitt (78) auf ein Ende des Mittenabschnitts (70) an der Sehnenrichtungs-Fügelinie (34) ausgerichtet ist, wobei ein erstes Flankenelement der Flankenelemente (74) entlang einer Seite des Mittenabschnitts eine breitere Breite in Querrichtung aufweist als ein zweites Flankenelement der Flankenelemente an einer gegenüberliegenden Seite des Mittenabschnitts,
wobei der Mittenabschnitt (70) aus einem ersten Material mit einer ersten Steifigkeit gebildet ist und die Flankenelemente (74) mindestens teilweise aus einem zweiten Material mit einer zweiten geringeren Steifigkeit gebildet sind, sodass die Flankenelemente eine Gesamtsteifigkeit aufweisen, die geringer als die erste Steifigkeit des Mittenabschnitts (70) ist.

2. Zusammengefügtes Windkraftanlagenblatt nach Anspruch 1, wobei das erste Material ein Kohlenstoffmaterial umfasst und das zweite Material ein Glasmaterial umfasst.

3. Zusammengefügtes Windkraftanlagenblatt nach einem der vorangehenden Ansprüche, wobei der aufgeweitete Endabschnitt eine kontinuierliche abnehmende Schräge umfasst.

4. Zusammengefügtes Windkraftanlagenblatt nach einem der vorangehenden Ansprüche, wobei die Flankenelemente (74) entlang einer gesamten Längslänge derselben eine konstante Querschnittshöhe aufweisen.

5. Zusammengefügtes Windkraftanlagenblatt nach einem der vorangehenden Ansprüche, wobei die Flankenelemente (74) in Richtung der Sehnenrichtungs-Fügelinie (34) eine abnehmende Querschnittshöhe aufweisen, die einer abnehmenden Querschnittshöhe des Mittenabschnitts (70) entspricht.

6. Zusammengefügtes Windkraftanlagenblatt nach Anspruch 5, wobei die abnehmende Querschnittshöhe der Flankenelemente (74) und des Mittenabschnitts (70) ein abgestuftes Profil umfasst.

7. Zusammengefügtes Windkraftanlagenblatt nach einem der vorangehenden Ansprüche, wobei die Flankenelemente (74) ein Kohlenstoffmaterial in mindestens einem Teil des Kopfabschnittes (78) und ein Glasmaterial in dem aufgeweiteten Endabschnitt umfassen.

8. Zusammengefügtes Windkraftanlagenblatt nach Anspruch 7, wobei der Mittenabschnitt (70) und die Flankenelemente (74) an Schalenkomponenten des Windkraftanlagenblatts angebracht sind, wobei das Kohlenstoffmaterial in dem Kopfabschnitt (78) an den Schalenkomponenten anliegend angeordnet ist.

9. Zusammengefügtes Windkraftanlagenblatt nach Anspruch 8, wobei sich das Kohlenstoffmaterial mindestens entlang einer Längslänge des Kopfabschnitts (78) erstreckt.

10. Zusammengefügtes Windkraftanlagenblatt nach einem der vorangehenden Ansprüche, wobei das erste Flankenelement eine längere Längslänge aufweist als das zweite Flankenelement.

11. Zusammengefügtes Windkraftanlagenblatt nach einem der vorangehenden Ansprüche, wobei die interne Fügestruktur (36) eine auf die Sehnenrichtungs-Fügelinie (34) ausgerichtete Aufnahmebuchse in dem ersten Blattsegment (30) umfasst, wobei der Mittenabschnitt (70) der Holmkappe von einer Längsmittellinie der Aufnahmebuchse versetzt ist, wobei das Flankenelement entlang einer Seite des Mittenabschnitts eine längere Längslänge und eine breitere Breite in Querrichtung umfasst als das Flankenelement an einer gegenüberliegenden Seite des Mittenabschnitts (70).

12. Zusammengefügtes Windkraftanlagen-Rotorblatt nach einem der vorangehenden Ansprüche, wobei die interne Fügestruktur (36) einen Holmbalken umfasst, der sich in Spannenrichtung von dem zweiten Blattsegment (32) in eine in dem ersten Blattsegment (30) konfigurierte Aufnahmebuchse erstreckt, wobei die Aufnahmebuchse eine obere und eine untere Holmoberfläche umfasst, die an den Mittenabschnitt (70) und die Flankenelemente (74) der einander gegenüberliegenden Holmkappen (46) geklebt sind.

13. Zusammengefügtes Windkraftanlagen-Rotorblatt nach Anspruch 12, wobei die obere und die untere Holmoberfläche der Aufnahmebuchse eine Breite in Sehnenrichtung umfasssen, die einer kombinierten Breite in Sehnenrichtung des Mittenabschnitts (70) und des Kopfabschnitts (78) der Flankenelemente (74) entspricht.

14. Zusammengefügtes Windkraftanlagen-Rotorblatt nach einem der vorangehenden Ansprüche, wobei das erste Blattsegment (30) eines von einem Wurzelendesegment oder einem Spitzenendesegment ist und das zweite Blattsegment (32) das andere von dem Wurzelendesegment oder dem Spitzenendesegment ist.

## Revendications

1. Pale de rotor d'éolienne à joint (22), comportant :
un premier segment de pale (30) et un deuxième segment de pale (32) s'étendant dans des directions opposées à partir d'une ligne de joint dans le sens de la corde (34) et reliés au niveau de la ligne de joint dans le sens de la corde (34) par une structure de joint interne (36) configurée entre les premier et deuxième segments de pale (30, 32), dans laquelle la structure de joint interne (36) comporte un caisson de réception dans le premier segment de pale (30) aligné sur la ligne de joint dans le sens de la corde (34) ;
des semelles de longeron opposées (46) dans le premier segment de pale (30), chacune des semelles de longeron (46) comportant :
une section centrale (70) s'étendant longitudinalement ayant une largeur transversale constante jusqu'à la ligne de joint dans le sens de la corde (34), dans laquelle la section centrale est décalée par rapport à une ligne centrale longitudinale du caisson de réception ; et
des éléments formant aile (74) disposés contre les côtés longitudinaux opposés de la section centrale (70), chaque élément formant aile ayant une section de tête (78) ayant une largeur transversale constante et une section formant queue évasée ayant une largeur transversale décroissante, la section de tête (78) étant alignée sur une extrémité de la section centrale (70) au niveau de la ligne de joint dans le sens de la corde (34), dans laquelle un premier élément formant aile des éléments formant aile (74) le long d'un côté de la section centrale a une largeur transversale plus large qu'un deuxième élément formant aile des éléments formant aile au niveau d'un côté opposé de la section centrale,
dans laquelle la section centrale (70) est formée à partir d'un premier matériau ayant une première rigidité et les éléments formant aile (74) sont formés au moins partiellement à partir d'un deuxième matériau ayant une deuxième rigidité inférieure de telle sorte que les éléments formant aile ont une rigidité globale qui est inférieure à la première rigidité de la section centrale (70).

2. Pale d'éolienne à joint selon la revendication 1, dans laquelle le premier matériau comporte un matériau à base de carbone et le deuxième matériau comporte un matériau à base de verre.

3. Pale d'éolienne à joint selon l'une quelconque des revendications précédentes, dans laquelle la section formant queue évasée comporte une pente décroissante en continue.

4. Pale d'éolienne à joint selon l'une quelconque des revendications précédentes, dans laquelle les éléments formant aile (74) ont une hauteur constante en coupe transversale le long de toute une longueur longitudinale de ceux-ci.

5. Pale d'éolienne à joint selon l'une quelconque des revendications précédentes, dans laquelle les éléments formant aile (74) ont une hauteur décroissante en coupe transversale vers la ligne de joint dans le sens de la corde (34) qui correspond à une hauteur décroissante en coupe transversale de la section centrale (70).

6. Pale d'éolienne à joint selon la revendication 5, dans laquelle la hauteur décroissante en coupe transversale des éléments formant aile (74) et de la section centrale (70) présente un profil en gradins.

7. Pale d'éolienne à joint selon l'une quelconque des revendications précédentes, dans laquelle les éléments formant aile (74) comportent un matériau à base de carbone dans au moins une partie de la section de tête (78) et un matériau à base de verre dans la section formant queue évasée.

8. Pale d'éolienne à joint selon la revendication 7, dans laquelle la section centrale (70) et les éléments formant aile (74) sont fixés à des composants de coque de la pale d'éolienne, le matériau à base de carbone dans la section de tête (78) étant disposé contre les composants de coque.

9. Pale d'éolienne à joint selon la revendication 8, dans laquelle le matériau à base de carbone s'étend au moins le long d'une longueur longitudinale de la section de tête (78).

10. Pale d'éolienne à joint selon l'une quelconque des revendications précédentes, dans laquelle le premier élément formant aile a une longueur longitudinale plus longue que le deuxième élément formant aile.

11. Pale d'éolienne à joint selon l'une quelconque des revendications précédentes, dans laquelle la structure de joint interne (36) comporte un caisson de réception dans le premier segment de pale (30) aligné sur la ligne de joint dans le sens de la corde (34), la section centrale (70) de la semelle de longeron étant décalée par rapport à une ligne centrale longitudinale du caisson de réception, l'élément formant aile le long d'un côté de la section centrale comportant une longueur longitudinale plus longue et une largeur transversale plus large que l'élément formant aile au niveau d'un côté opposé de la section centrale (70).

12. Pale de rotor d'éolienne à joint selon l'une quelconque des revendications précédentes, dans laquelle la structure de joint interne (36) comporte une poutre de longeron s'étendant dans le sens de l'envergure à partir du deuxième segment de pale (32) jusque dans un caisson de réception configuré dans le premier segment de pale (30), le caisson de réception comportant des surfaces de longeron supérieure et inférieure liées à la section centrale (70) et aux éléments formant aile (74) des semelles de longeron opposées (46).

13. Pale de rotor d'éolienne à joint selon la revendication 12, dans laquelle les surfaces de longeron supérieure et inférieure du caisson de réception comportent une largeur dans le sens de la corde correspondant à une largeur combinée dans le sens de la corde de la section centrale (70) et de la section de tête (78) des éléments formant aile (74).

14. Pale de rotor d'éolienne à joint selon l'une quelconque des revendications précédentes, dans laquelle le premier segment de pale (30) est l'un parmi un segment d'extrémité de pied ou un segment d'extrémité de bout et le deuxième segment de pale (32) est l'autre parmi le segment d'extrémité de pied ou le segment d'extrémité de bout.
